Europäisches Patentamt

European Patent Office

Office européen des brevets

(11) Publication number: **0 434 003 A2**

# EUROPEAN PATENT APPLICATION

(21) Application number: 90124638.9

(22) Date of filing: **18.12.90**

(51) Int. Cl.5: **G05D 7/06**, G01F 1/22, F16K 31/04

(30) Priority: **18.12.89 US 452232**

(43) Date of publication of application:
**26.06.91 Bulletin 91/26**

(84) Designated Contracting States:
**AT BE DE FR GB IT**

(71) Applicant: WAUKEE ENGINEERING COMPANY, INC.
5600 West Florist Avenue
Milwaukee, Wisconsin 53218(US)

(72) Inventor: **Payne, Kenneth R.**
**W148 N8252 Albert Place**
**Menomonee Falls, Wisconsin 53051(US)**

(74) Representative: **Sajda, Wolf E., Dipl.-Phys. et al**
**MEISSNER, BOLTE & PARTNER**
**Widenmayerstrasse 48 Postfach 86 06 24**
**W-8000 München 86(DE)**

(54) Automated powered flowmeter valves and control thereof.

(57) A mnotorized flow valve and electronic controller is mounted to a flowmeter (1) having a sensor (3) creating a flow-related signal. The valve (11) includes a tapered valve stem (52) linearly moving through a round sharp-edge opening (53) in an orifice plate (43) to establish a precise flow rate at high pressures as in a treating furnace. The stem (52) is longer than the opening (53). A stepping motor (26) has a linear moving shaft (57) connected to the valve stem (52). A knob (27) on the shaft (57) permits manual valve setting, and interlocks to fix the shaft (57) against rotation for motor positioning. The stem (52) and shaft (57) are releasibly coupled for use of different stems in one orifice plate (43), which is also replaceable. An electronic controller (6) provides compensation for non-linearity in flow rate. A relatively constant force relationship on the stem (52) is established, with the valve (11) totally closed with a small seating force and with a relative low breakaway force. The controller (6) actuates the motor (26) through a special multiboard circuit to a demand flow. A manual control is enable if the programmed circuit malfunctions. A motor speed change circuit responds to a differential in the level of the sensed and demand signals. Limit signals set the manual control. A control panel (30) includes an auto/manual switch (31), a manual control switch (32) and lamps (36, 37) which indicate the state of the valve control malfunction thereof.

FIG. 2

# AUTOMATED POWERED FLOWMETER VALVES AND CONTROL THEREOF

This application relates to an automated powered flowmeter valve control for controlling fluid flow.

Fluid systems in various applications require close and accurate flow controls, with rapid response times. Gas fired combustion units for metal hardening furnaces use mixtures of gases such as nitrogen and methanol to generate a suitable hardening atmosphere. Gas flows of nitrogen may vary with various environmental conditions. The control unit should provide a rapid response to reset the respective gas flows and the like. U.S. Patents issued to the applicant which disclose typical flowmeters used for hardening furnaces include US-A- 4,774,676 which issued September 27, 1988 and US-A- 4,864,870 which issued September 12, 1989. Other flowmeter devices are available and disclosed in the prior art as disclosed in the above patents.

There is a need for an improved system for accurate and rapid readjustment of a flow control valve coupled to a metered flow system to accurately hold the flow within close parameters, as well as permitting shutdown in limit positions indicative of an abnormal flow and a malfunction or failure within the metering system.

## Summary Of The Present Invention

The present invention is particularly directed to a valve unit and a controller for flowmeters for providing close set point accuracy. A valve body has an orifice plate with a cylindrical flow orifice. A tapered valve stem moves in a linear motion through the orifice with a set regulated flow rate related to the axial position of the stem in the orifice, and particularly the flow edge. A stepping motor positions the stem. Each motor step provides a small incremental linear movement of the valve stem, such as generally providing movement on the order of 0,025mm (0,001 inch) per pulse. A manual adjust ment is also provided . An interlock is provided between the support for the motor and the adjustable member for locking of the motor shaft against rotation while permitting the linear movement of the motor shaft. An electronic controller located within a housing provides a programmed input to the motor.

The tapered valve structure is particularly adapted to controlling higher pressure fluid flows. The taper does introduce some non-linearity into the valve system which increases the flow for which the controller can compensate. The tapered valve member is formed with a length substantially greater than the length of the orifice. The tapered valve unit prevents jamming and operates with a relatively constant force. In one feature, a valve body portion is sealed in a valve body with a frictional seal. This establishes a maximum force relationship for moving the tapered stem and rapid response at all settings of the valve stem. With the linear movement of the valve stem, the valve can be moved to the total closed position with a small seating force thereby establishing a total seal of the flow without the usual high force seating of the valve unit. As a result, a relative low breakaway force is required in opening the valve without damage to the valve structure.

In a flowmeter showing practical construction, a motorized valve controller is coupled in the above patents with a low current flow signal as a controller input. A valve unit includes a valve body having an axial passageway and a lateral passageway coupled to the meter. A valve plate has an orifice related to the desired flow range. For custom designing to different flow ranges, the valve plate is replaceable. A stem body member is slidably in the bore with an encircling friction seal, preferably a U-shaped cut seal such that leakage tends to maintain the seal with an essentially constant frictional force. A stepping motor is mounted to the base plate to which the valve body is secured and in precise alignment with the valve body and valve stem. A rotary-to-linear motion couples the motor output to a driven shaft having an inner end formed as a smooth shaft member fixed to the valve body. An adjustment wheel on the outer end of the motor-driven shaft provides for the manual valve adjustment. The motor preferably has a dynamic or other brake to prevent rotation of the rotary-to-linear device such that the turning of the wheel and attached shaft insures linear positioning of the valve. A cover access opening to the motor and the adjustment wheel includes an interlock to the wheel to place the rotational position of the shaft in the preset position. The interlock permits the linear shaft movement of the shaft but prevents the wheel and shaft rotation.

The housing includes a circuit board unit and control devices within the upper portion of the housing for motor and control interconnection. Various external controls and signal devices are also provided.

A manual control provides for manual control of the motor to increase and reduce the flow rate, which can be readily read on the meter unit. In a preferred system, the rate of flow has a low or a high limit, and a significant drop below the lower limit, indicating a serious failure is specially indicated as simultaneous operation of both high and low limit indicators. Other controls can, of course, be readily provided and incorporated into the system if so desired.

The present invention has been found to provide a highly improved motorized valve and valve control for controlling gas flows with accurate valve positioning and accurately establishing flow over relatively significant pressure and flow ranges. The valve structure can be precisely and accurately formed with present day machining techniques. The system using low voltage driven stepping motors, conventional solid state technology and the like provides a practical com mercial construction of the system for use in severe environments.

Brief Description Of Drawings

In the drawing,

Fig. 1 is a diagrammatic illustration of a controlled flowmeter and a programmed motorized valve unit illustrating an embodiment of the invention;

Fig. 2 is an enlarged vertical section of the valve unit shown in Fig. 1;

Fig. 3 is an exploded view of the valve unit shown in Figs. 1 and 2;

Fig. 3a is an enlarged fragmentary view of the flow valve unit shown in Figs. 2 and 3;

Figs. 4a and 4b are a schematic circuit for the illustrated embodiment, with Fig. 4a a motor drive circuit and Fig. 4b a controlled circuit board; and

Fig. 5 illustrates a modification to the system shown in Figs. 1-4b.

Description Of Illustrated Embodiment

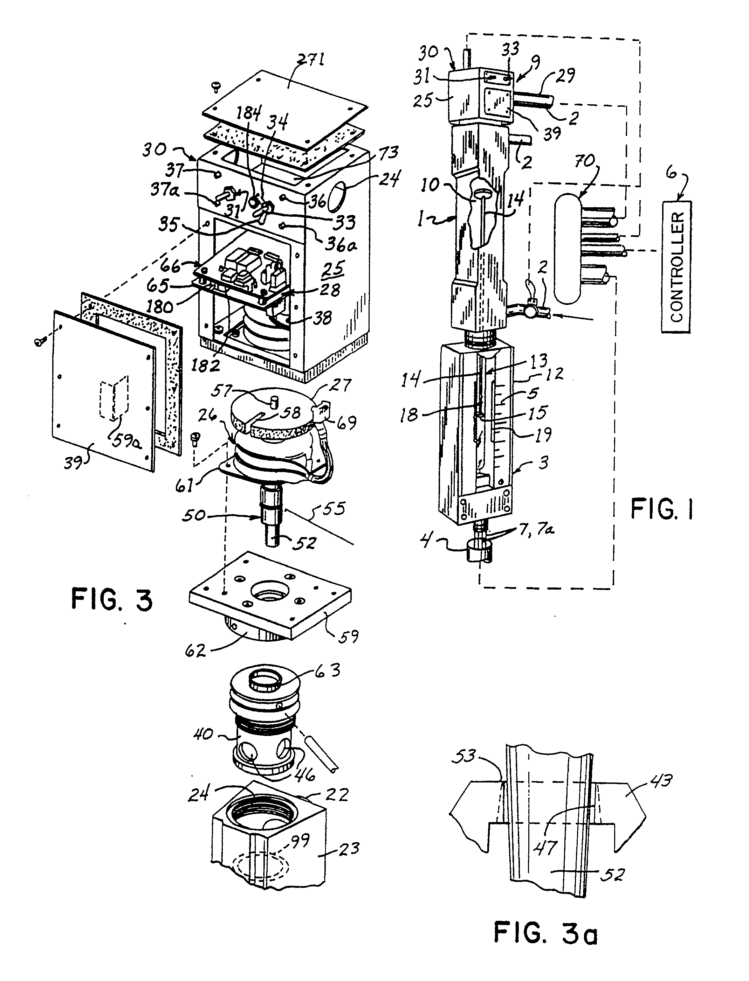

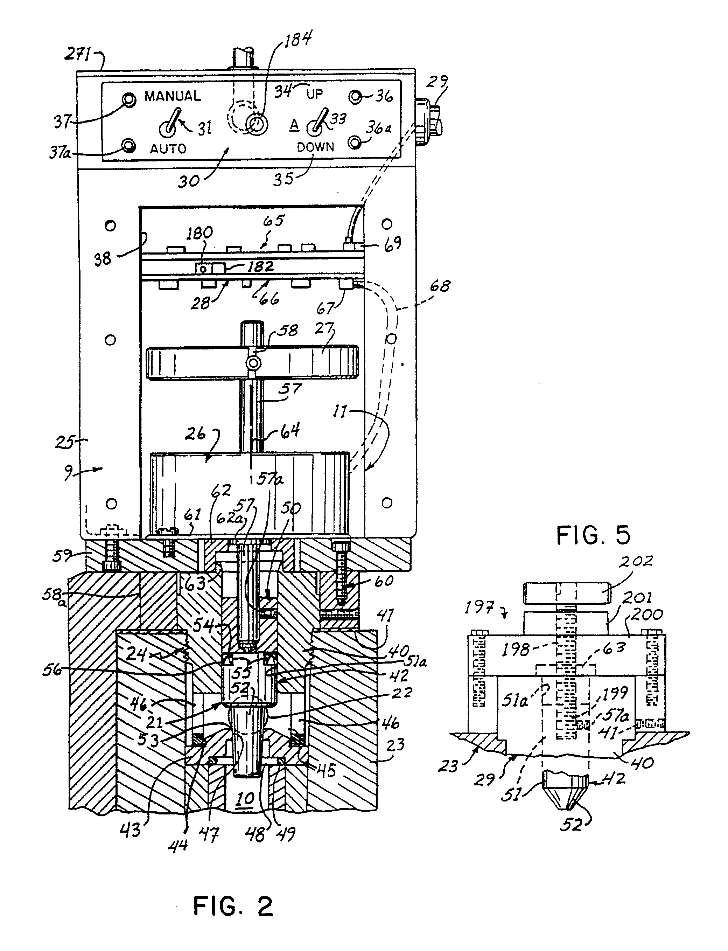

In Fig. 1, a flowmeter 1 in a flow line 2 measures the flow rate of a gas (or other fluid). In a hardening furnace and the like, separate flowmeters are connected to establish predetermined flow rates of nitrogen and of methanol to a mixing chamber and therefrom to the furnace and creating a suitable atmosphere for hardening within the furnace. Generally, the flowmeter 1 incorporates a related sensor unit 3, (preferably constructed as in US-A- 4,864,870), and generates an analog signal at a coupling cable. A direct visual reading is given on a scale unit 5. The cable 4 connects a D.C. supply to an optical sensing system within unit 3 and produces the analog signal which is compared to a command signal from a control unit 6 such as a programmer for producing a programmed flow. A motor driven controller is mounted to the opposite end of the flowmeter 1. Cable 4 includes signal lines 7 and 7a connected to control unit 6, a data logger, not shown, and a flow control unit 9 secured to the top of flowmeter 1 for controlling of the flow in flow line 2.

The flowmeter 1 is more fully disclosed in US-A- 4,440,028 which issued April 3, 1984 to Ralph W. Ramlow. Generally, flow line 2 connects to the opposite ends of a flow passageway 10. The control unit 9 includes a motorized valve unit 11 within the upper connection of the meter flow passageway 10 to control the flow therethrough and thereby the flow rate.

Sensor unit 3 includes outer housing 12 with a tube 13 aligned with and coupled to the flowmeter 1. A float rod 14 is mounted within a suitable oil filling the tube 13, and the upper end is located within the meter flow passageway 10 and thereby coupled to the flowing gas being metered in flowmeter 1. A disc indicator 15 is secured to the lower end of rod 14 and establishes a visual readout with respect to the readout scale 5 provided on the front of the sensor unit 3. As more fully developed in the US-A- 4,440,028, LED light bar 18 and a phototransistor bar 19 are in the housing 12. Bar 18 establishes a continuous beam of light passing through the tube 12. Float rod 14 interrupts the light beam and controls the energization of the phototransistor bar 19, with the output provided as an accurate analog current signal, directly proportional to the position of the indicating disk 15 and the float rod 14. Typically, the output current at lines 7 and 7a may vary between 4 and 20 mA for full scale movement of the sensor disk 15.

In Figs. 1-3, valve unit 11 includes a flow control valve 21 located between the axial flow passageway 10 in an elongated housing or body 23 and the flow line connector 22 of the flowmeter.

An inlet gas line 2 is connected at one end of the housing 23 and the outlet gas line 2 Connected at the opposite and upper end of housing 23 (Figs. 1-3). Meter housing 23 has a flat top wall having a threaded opening 24. This structure has been manufactured in this mode and construction over a number of years, with a manually adjusted flat valve seat unit and an external control knob. Alternatively, a cap and gasket closes the opening for a non-controlled flow system. For methanol or like hazardous material, fluid tight connections including appropriate gaskets are used to positively prevent leakage.

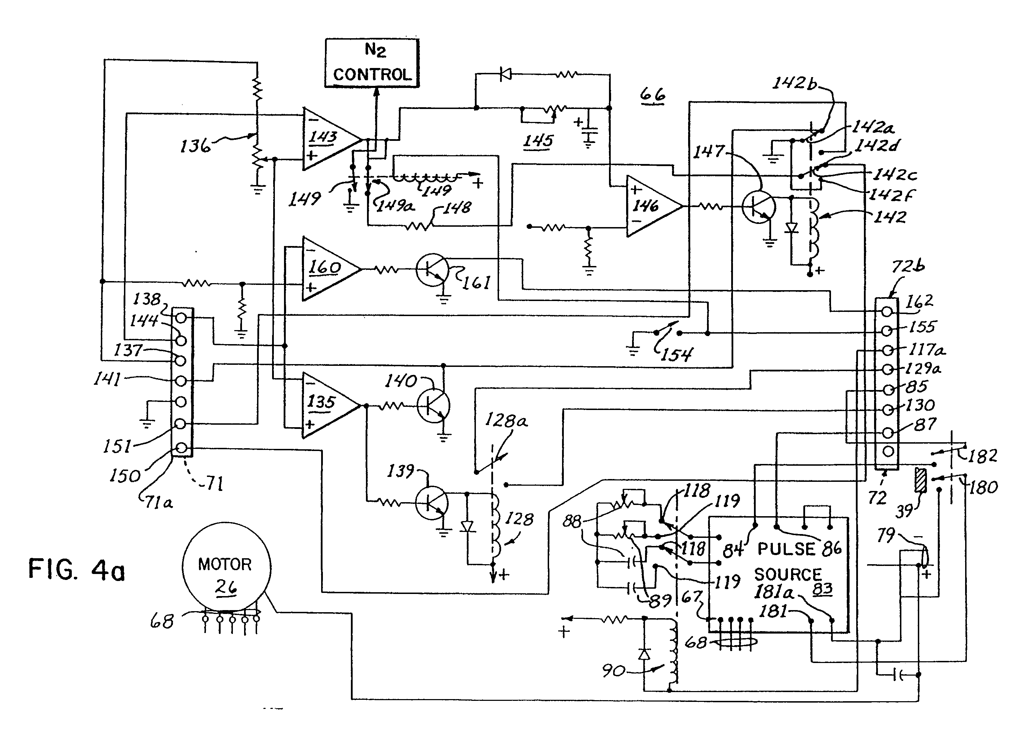

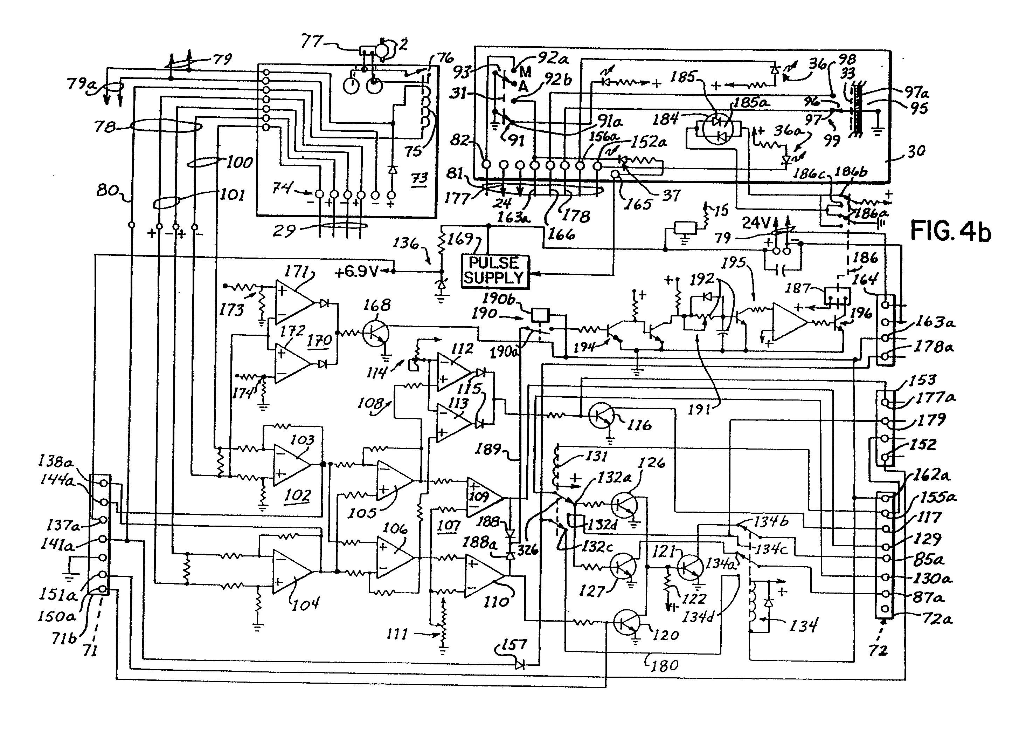

The valve unit 11 projects upwardly from the flowmeter into a control housing 25. A stepping motor 26 in the lower end of the housing 25 is coupled directly to position the valve unit 11. A manual operator 27, shown as a small wheel, is coupled to the motor 26 for selective manual positioning of the valve unit 11. An electronic control module 28 generally includes an appropriate circuit board which is releasably secured within the housing 25 immediately above the motor 26 and the adjustment wheel 27. The control module 28 is interconnected to the motor circuit (see Fig. 4) to drive the motor. A power and signal cable 29 is coupled to the side of the housing 25 and interconnects the programmed controller 6 as well as the sensor output cable 4 into a motor control for motor 26. A selection control unit 30 is in circuit with appropriate operating and indicating units on a panel in the top of the front housing wall. An automatic/manual selection actuator 31, shown as a pivotal lever or arm, is mounted to the wall and actuates an appropriate switch unit (Fig. 4) for setting a manual mode or an automatic mode responsive to the output of the sensor unit 3. In the manual mode, a drive control actuator 32, shown as a lever, is operable between a neutral position 33 for automated control, an upper position 34 for opening the valve 21 and a down position 35 for closing the valve 21. A high limit lamp 36 and a low limit lamp 36a on the panel indicates flow rates reaching to one or the other limits. Lamps 37 and 37a adjacent actuator 31 identify the manual and auto setting. The same lamps 36, 36a, 37 and 37a are used to indicate other conditions.

The housing 25 has a covered access opening 38 with a releasable cover 39.

The present invention is particularly directed to the construction of the motorized control valve 21 and the controlled drive system for the motor 26. The other components are preferably constructed in accordance with the prior flowmeters of the assignee as discussed above.

In Figs. 2 and 3, valve 21 includes a valve body 40 having an offset portion threaded into a threaded opening 24 within the upper end of the housing or motor body 23, with a sealing gasket. A valve orifice plate 43 is secured to the bottom of a central opening 42 by an adhesive 44 between the valve body 40 and orifice plate 43. The orifice plate 43 has a central orifice 47. An enlarged chamber 45 has equicircumferentially spaced openings 46 for discharging of gas through valve body 40 to outlet line connector 22 and line 2. The innermost end face of the plate 43 is formed as a substantially planar plate member having an O-ring seal 49 in a recess 48 and in sealing engagement with the flowmeter's end wall structure whereby all gas flows through the orifice 47.

A valve stem unit 50 has an enlarged piston 51 slidably mounted within an outer bore 51a of opening 42 and includes a special valve stem 52 projecting downwardly through the orifice 47.

The orifice 47 is formed with a circular edge 53 at its outermost face, and is shown with a round constant diameter opening wall having a sharp circular edge 53, (see Fig. 3a), and defines an essentially edge flow control with respect to the valve stem 52.

Stem 52 is shown as an essentially solid member having a reverse taper with respect to that of the orifice 47. The stem diameter progressively decreases from the outer end to the inner end and stem 52 tends to close against the edge 53 on inward movement and open upon outward movement.

In Fig. 2, stem 52 closes the valve, with an extended end projecting significantly beyond the orifice plate 43. The inner end of the orifice plate 43 includes a circular recess 53a providing an essentially unobstructed flow path from the meter passageway 10 to the orifice 47. The illustrated valve stem 52 extends a number of multiples inwardly of the orifice 47.

Stems with slightly different taper angles mounted within the same orifice control a particular S.A.E. flow range through the orifice. Different stems provide a basic flowmeter for a wide range of flows.

The orifice 47 may be formed with an expanding taper from the sharp edge 53 (Fig. 3a). The round orifice provides a substantial relationship between the flow and the position of the valve stem 52 at low flows but with linearity decreasing with the larger flows. Non-linearity of flow is minimized by the tapered orifice.

Plate 43 and unit 50 are replaceable for different flows in a selected flow range.

The valve stem unit 50 is coupled to the stepper on the body motor 26 and positions stem 52.

Stem body 51 fits in bore 51a of the valve body 40 with a close sliding fit. Body 51 has an annular sealing recess 54 with an annular seal 55 therein slidably engaging the bore. Seal 55 is preferably a cup-shaped member having side lips 56 defining a recess opening inwardly toward the flowmeter. Gas leaking past the interface into the recess maintains the precompressed lips 56 in a firm seal with a relative low frictional force loading of the stem. The seal is of preferably self-lubricating materials if the fluids permit.

The motor driven shaft 57 extends through bore 51a into an opening in the outer end of the stem body 51 and is fixed as by set screw 57a.

An encircling motor collar 58 is threaded onto the uppermost end of the valve body 40 and defines a planar surface. A base plate 59 having a central opening somewhat larger than that of the bore but less than the outer diameter of the valve body, is bolted or otherwise secured to the circular collar 58 to receive a motor mount plate 61. A locating ring 62 projects downwardly from the underside of the plate 61 and concentrically on the valve body 40. A small body hub 63 is accurately machined to mate with the locating collar 58. Ring 62 is press fitted, or otherwise fixedly secured, to a bearing housing 62a to precisely locate the ring 62 relative to shaft 57 which is thereby precisely located with respect to the valve bore 51a and the valve stem unit 50. this has an axis 64 coincident with the shaft 57, valve stem 52 and orifice edge 53.

Motor 26 may be a stepping motor of any suitable or desired construction providing the desired accuracy. Motor 26 is shown with a rotary-to-linear motion output at motor driven shaft 57. Hurst Manufacturing Has a motor, Model Hurst No. SX5.4104.003 which has monitored gas flows in the S.A.E. range of 10 to 2400. A rotary-to-linear motion device may have a threaded shaft portion coupled to a rotating gear resulting in linear shaft movement with the shaft held against rotation. The handwheel 27 is shown secured to shaft 57 by a setscrew and has an edge slot 58. A vertical plate 59a on cover 39 mates with slot 58, which prevents shaft rotation. Motor rotation moves the shaft 57 in a linear direction of the shaft axis. When motor 26 is de-energized and the rotary output fixed, physical rotation of the wheel 27 and shaft 57 also moves shaft on its axis. Motor 26 may be dynamically or otherwise braked when the motor is off, as in Fig. 5.

The motor 26 is enclosed within the control housing 25. A control circuit board 65 and a main power circuit board 66 are releasably secured in the housing above the wheel 27. Housing 25 has an access opening 38. The circuit boards fit within the control box with multiple pin connectors 67 providing releasable connection of the motor cable 68 and the board 66. The main input/output cable 29 is secured to the side of the housing 25 above the circuit board 65 and is interconnected to the circuit board and the control components by a connector 68 (Fig. 4) for connecting the motor 26, the manual controls, sensor unit 3, the process controller, data logger where used, and the like. Cables from the sensor and control box are preferably connected to terminal board 70, power is from a 115 volt supply for operating a main off/on solenoid and powering the low voltage DC supply (24 volt) for the stepper motor 26 and the control system (Fig. 4).

The top of housing 25 has an access wall 271 for direct access to the LEDs and other devices and assembly is single integrated package requiring only the two separate cable connections.

The combination of the valve cage and orifice structure and tapered valve stem unit have been designed with four basic cage structures, each having appropriate orifice plates for each flow range. Within each range, the valve stem unit is formed with a somewhat differing angle. A first range covers S.A.E. flows between 10 and 18 with an orifice diameter of 9,525 mm (0,375 inch) and a valve stem taper angle varying between 0° 40' and 4° 30'. The fourth range covers six S.A.E. flows varying from 570 to 3400, with an orifice diameter of 36,5 mm (1,437 inch), a valve stem body with a flow related diameter of 38,1 mm (1,5 inch) and a valve stem taper angle varying between 7° 45' and 32° 30'. The valve stem moves from the extended position through the orifice upwardly out of the orifice for full flow with minimal back pres sure. The total extended travel compensates for back pressure effects in the valve. The valve stem has a total selected movement such as 25,4 mm (1 inch) with an orifice depth of approximately 9,5 mm (3/8 inch).

Fig. 4 is a schematic circuit of a control embodiment including the motor board 66 coupled to the motor through a cable 68. The motor board 66 by a first terminal connector 71 having mating part 71a and 71b on the boards 65 and 66. A second terminal connector 72 connects the drive output and certain interlocking circuits to the motor board 66, and has mating terminal part 72a and boards 65 and 66. complementary pin and sockets at the connectors are given a corresponding number with one distinguished by a letter. The 24 volt supply and signals from the head and from the controller are connected to an input supply circuit board 73 having a terminal strip 74. An interlocking relay 75 on board 73 controls contacts 76 in response to application of the 24 volt control power and an associated ground interlock. Contacts 76 control the main solenoid 77 in the flow line 2 for the metered gas.

Signals from the meter head 3 and the controller 6 are connected by cable 29 to the board 73 and by a cable 78 to the control board 65. The 24 volt supply is connected from board 73 by separate cables 79 and 79a to the boards 65 and board 66. Each cable 79 and 79a is separately by-passed to ground by a capacitor 79b and 79c, respectively, to avoid feedback between the two circuits. The several relays and other components connected to the 24 volt supply are labeled by a symbol for clarity of illustration. A relay interlock line 80 in cable 78 connects the interlock relay 75 to ground through board 65. Interlocking for the manual control unit and the interrelated displays of the panel 30- are interconnected . A cable 81 between terminal unit 82 and board 65 receives power and interlocking signals for energizing the several indicator lamps and providing certain interrelated automated switching between an automatic state or mode and a manual state or mode of operation in accordance with the description as hereinafter given.

MOTOR DRIVE

The motor board 66 includes supply source 83 for pulsing motor 26. The source 83 circuit includes an internal pulse generator, not shown, adapted to establish a pulse signal output to the motor 26 for driving the motor either clockwise or counterclockwise. Source 83 is activated by removing ground from an input control pin 84. Pin grounding is through an interconnecting lead having a common interconnection lead having a common interconnection to a pin 85 on connector 72b and socket 85a on socket connector 72a. The directional control is established by establishing a ground signal at pin 86 of source 83. Pin 86 is connected via a lead with a pin 87 on pin connector 72b and a socket 87a on connector 72a, on the motor board 65 and the circuit control board 65, respectively. The motor 26 is adapted to be operated at two different stepping speeds, identified as a high speed and a low speed. R-C networks 88 and 89 are coupled via the contacts of a relay 90 to inputs of source 83. Resistor and capacitor network 88 establish a relatively slow rate pulse train to the motor 26. The alternate resistor and capacitor network 89 and the motor speed.

## AUTO/MANUAL MODE SELECTION

As shown on the display panel board 30 in Fig. 4b, a manual/auto selection switch 91 is a double pole, double through unit having an automatic position placing board 65 in a condition for automated operation. Lamp 37a shown as an LED, is connected in circuit through the auto switch contacts 91a and is on, with a particular color such as green indicating the automatic state. In the manual switch position (shown in phantom), contacts 92a and 92b are grounded by the movable contacts 93 and interconnected through leads of the interconnecting cable 81 to board 65 to disable the automated response, and connects the manual directional switch 95, shown as a single pole, triple throw position switch into circuit. A movable grounded contact 96 of switch 85 is spring loaded by Spring 97a to engage contact 97 which is connected to a lead providing an Interlock into the automated control system. Contact 96 is movable to opposite sides to engage either an "up" or "down" contact 98 or 99.

## AUTOMATIC CONTROL OF VALVE 21

The motor 26 is then driven in accordance with the relative signals received from the sensor head 3 and the controller 6. The signals provide a minimum signal and a maximum signal proportional to the desired flow rate; selected in a practical environment to vary between 4 and 20 mA. A 20 mA signal generates maximum flow rate signal, either on demand or actual flow, and a 4 mA signal is indicative of the minimum flow rate. The signals are isolated and applied via paired leads 100 and 101 from board 73 as illustrated.

A comparator unit 102 on board 65 compares the relative level of the signal from the head leads 100 and from the controller leads 101. Comparator unit 102 is shown with a first amplifier 103 and a second amplifier 104. Amplifier 103 and 104 outputs are connected to a pair of similar amplifiers 105 and 106 to define a comparator circuit. The output of the head amplifier 103 is connected to the inverting input of the one amplifier 105 and the non-inverting input of the one amplifier 105 and the non-inverting input of the opposite amplifier 106. Similarly, the controller amplifier 104 has its output connected to the non-inverting input of the first comparison amplifier 105 and the inverting input of the second comparison amplifier 106. The higher signal at the positive input of the amplifiers 105 or 106 turns the corresponding amplifier on and the opposite amplifier of the comparison circuit off. Amplifiers 106 and 105 each have a feedback resistor 105a and 106a, which change the comparator action from an instant transition from "off" to "on", to a gradual build-up of output voltage depending upon the different signal of the amplifier inputs. Only one of the amplifiers 105 and 106 will therefore be gradually turned on in accordance with the relative signal levels from the head 3 and from the controller 6. The head-related comparator amplifier 105 when "on" drives the motor 26 to open the valve 21. Conversely, the controller-related amplifier 106 drives the motor 26 to close the valve 21.

The output from the amplifier 106 builds up gradually to a voltage into amplifier 110 and operates the latter when the voltage at the non-inverting Input from amplifier 106 goes slightly higher than the reference voltage on the inverting input of amplifier 110. Adjusting the low window reference (shown including the adjustable potentiometer 111) changes the signal level around the set points to determine the accuracy of set point and neutral zone of motor operation. The operation of the high window amplifiers 112 and 113 is similar, such that adjusting the reference circuit 114 determines window width of operation of high speed conversion from low speed to high speed motor operation.

The same action is established when the level of the head signal from amplifier 103 is larger or higher than the control signal from the controller.

The amplifiers 105 and 106 are connected to a low window circuit 107 and a high window circuit 108. Circuit 107 includes output amplifiers 109 and 110, connected to amplifier 105 and 106 and the inputs connected in common and to an adjustable potentiometer circuit as a range control biasing circuit 111.

The circuit of window 107 is operative with the differential between the two signals varying by less than 5% of the total range. Window circuit 108 is operative and includes amplifiers 112 and 113, with one input connected to amplifier 105 and 106 and a second common input to a reference source 114. The output operates the motor at the high speed.

If the signal differential is 5% or more of the total maximum difference in signal levels, amplifiers 112 or 113 establishes an output signal at the common connection. Isolating diode 115 isolates the two amplifier outputs. The output is connected to drive a transistor 116 "on", which ground socket 117 of socket connector 72a and thereby to pin 117a of pin connector 72b on the motor board 66. Pin connector 117a grounds and energizes relay 90, with contacts 118 disconnecting the low speed network 88 and contacts 119 connecting the high speed network 99.

When the controller signal is smaller than the meter head signal, amplifier 110 is "on" and is connected directly to the input of a transistor 120 which turns "on" and provides close signal to ground an enable transistor 121. Transistor 121 has a base connected via resistor 122 to the 24 volt bus and is normally conducting and is held off when grounded, thereby removing ground from its output. The output of transistor 121 is connected via contacts 134b of a manual/auto relay 134 to the socket 85a of terminal connector 72a and thereby to the pin 85 of the motor circuit board connector 72b selectively ground and release the source 83 via the enable pin 84. The turn-off of enable transistor 121 removes the ground from pin 84, and the source 83 is activated and transmits a train of pulse signals to the pulse motor 26 at the normal low speed.

Motor 26 slowly close the valve 21 unless the differential in the head and control signals is greater than 5% of the total possible difference. In the latter even, relay 90 is energized and drives the motor 26 to close valve 21. As the valve 21 closes, the differential of the signal decreases and when it drops below 5%, transistor 116 turns off as a result of the turn "off" of the conducting amplifier 112 or 113, relay 90 is de-energized and reset its contacts to close contacts 118 and again insert the low speed network 88 and thereby automatically revert to the low motor speed, as the valve approaches and moves to the desired setting.

If the controller signal is larger than the head signal the valve 21 opens.

The valve opening amplifier 109 is connected to drive a transistor 126 "on" and simultaneously to drive a directional transistor 127 "on" to establish energization of the motor 26 to open the valve, as follows. The circuit for circuit connection between the amplifier 109 and the transistor 126 and 127 includes an interlock relay 128 on board 66. The relay 128 prevents opening of valve 21 if the signal from the controller 6 is below the minimum level, and generally below a level slightly above the minimum level. Normally open contacts 128a in series with the output connection of amplifier 109. Referring to the control board 65, the output of amplifier 109 is connected to socket 129 of strip connector 72a and through the complementing pin 129a of connector 72b connected to the movable contact of relay contacts 128a. The opposite side of the relay contacts 128a is connected to the pin 130 of connector 72b and to socket 130a of connector 72a. Socket 130a is connected to a no-ally closed contact 132a of a double pole, double throw switch unit 131. The normally closed contact 132a is connected by the engaged movable contact 132b directly to transistor 126 and 127 for energizing of the motor 26 with an appropriate rotation. A second contact 132c of the double pole, double throw relay 131 is connected directly to an "up" drive lead for manual control as hereinafter described. The opposite contact 132b is connected in common to the bases of the transistors 126 and 127. With the relay 131 in the normal illustrated position, both transistors 126 and 127 are energized. The output of the transistor 126 is connected to turn the enable transistor 121 "off" and thereby provide a signal via socket 85a and pin 85 of connectors 72a and 72 to the drive input pin 84 of the source 83 in the same manner as the turn on of transistor 121 by the "down" or close control transistor 120, as previously described. simultaneously, the transistor 127 is energized, and provides a ground signal via terminal socket 87a and pin 87a of connector 72a and 72b to the directional control pin or input 86 of the pulse source 83 on board 66 which reverses the pulse train and, reverses the direction of the motor.

Transistors 121 and 127 are also coupled in circuit through a manual/automatic relay 134 having a full line auto position and an alternate phantom line manual position. Relay 134 is a double pole, double throw unit having fixed contacts 134a and 134b connected to the output of the transistor 127 and transistor 121, respectively. Relay contacts 134c and 134d establish inputs for up and down energization of the motor in the manual mode.

Interlock relay 128 has open contacts 128a with the controller below a set lower limit, and must be energized to drive the motor up and open the valve, and does so only if the controller is set above the limit. The relay 128 is controlled by the sensing a signal from the controller 6 via a reference amplifier 135 on board 66, above the minimum demand level of 4 mA and preferably slightly above, such as 4,17 mA. The comparator referenced amplifier 135 has a first negative input connected to a reference voltage circuit 136 on board 64, and particularly through pin 137 and socket 137a of connectors 71a and 71b. A second positive input to amplifier 135 is connected via the pin 138 and socket 138a of the connectors 71a and 71b to the output of the controller amplifier 104 on board 65. The output of the IC amplifier 135 is driven "off" with the controller signal below 4,17 mA driven on at 4,17 mA and above. The output of the IC amplifier 135 is connected to drive a transistor 139, the output of which is connected to the ground side of the relay 128. If the signal is at 4,17 mA or above, the amplifier is driven on, transistor 139 conducts an the relay 128 is energized and contacts 128a close and enables the automatic control circuit. If the signal from the controller 6 is below 4,17 mA the amplifier 135 is driven off preventing completion of the control circuit to open the valve 21.

The output of amplifier 135 is also connected to control a transistor 140 on board 66 which is connected to ground a line connected respectively to the terminal pin 141 and socket 141a of connectors 71a and 71b on the boards 65 and 66. The same line is also connected to relay contact 142a of a relay 142 or board 66, having normally closed contacts to also turn on the low limit lamp.

Socket 141a is connected to the ground lead 80 from the input board 73 for solenoid relay 75 and maintains power to the relay and thereby the solenoid 76 under normal operation. With amplifier 135 establishing an output and indicating a controller demand signal above 4,17 mA the ground side of relay 75 is grounded and the main solenoid 77 is held open.

The solenoid relay 75 is also energized with a connection to pin 141 of connector 71a to establish an alternate ground path from that of transistor 140 via the normally closed contact arm 142a and a contact 142b of a relay 142. Contact 142b is connected via pins 141 and 141a to the ground line 80 to the solenoid relay 75. Relay 142 is operated to control its contacts in response to establishing of a low limit head signal, as follows.

An IC reference amplifier 143 has its positive input connected to same reference signal source in common with the IC reference amplifier 135. The negative input of the amplifier 143 is connected to the pin and sockets 144 and 144a of the connectors 71a and 71b on the board 66 and 65. Socket 144a on board 65 is connected to the output of the head sensor amplifier 103. The amplifier 143 compares the head control signal with the reference signal. If the head signal is above 4,17 mA the amplifier 143 is held off. At a signal below 4.17 from the head, the amplifier 143 is "on" and applies a signal to a signal time delay network 145. After a short period, such as two seconds, the time delay network 145 establishes a signal which is applied to the positive input of an IC amplifier 146 and turns the amplifier "on". The output signal of amplifier 146 is connected to turn a transistor 147 on and energize relay 142. The relay 142 is a double pole relay having the first movable contact 142a connected to ground and contact 142b is previously described. A second movable contact 142c or relay 142 normally engages a contact 142d which is connected in circuit directly to the output of the lower limit reference amplifier 143 to energize the closing transistor 120 on the control board 65. Thus, contact 142d is connected in series with a resistor 148 and relay contacts 149a and 149b of a high limit relay 149 to the output of the limit reference amplifier 143, which provides a feedback signal to the down transistor 120 via the engaged contacts 142c and 142d, and pin 150 and socket 150a of connectors 71a and 71b.

During the time delay period of the timing network 145, the motor 26 is energized in the down direction to provide a firm closing of the control valve, and thereafter serves to open the ground circuit to the solenoid valve as a result of the switching action of the relay 142.

The alternate contact position of the relay 142 include a contact engaged by the second movable contact arm 142b upon energization of relay 142. The first movable contact arm 142a is moved by relay 142 when energized to engage a contact 142e which is connect ed to ground the pin and socket 151 and 151a of strip connectors 71. Socket 151a on the control board 65 is connected via a lead to a pin 152 on a pin and socket connector 153 on board 65. Pin 152 is connected to the control panel via cable 81 and particularly a terminal pin 152a which is in turn connected to the return side of low limit lamp 36a, which preferably presents a related color display, preferably a red light indicating a low limit. The 24 volt supply at the panel is connected to the LED lamp.

Relay 142 has a normally open contact 142f engaged by movable contact 142c when relay 142 is engaged. Contact 142f is connected to ground via a lead 153a in common with the movable contact 142a and thus in the energized state grounds the down transistor 120 via the pin and sockets 150 and 150a. This limits the closure action at shutdown in the event adjustment was not perfect.

The high limit relay 149 on board 66 is connected to a control line including a normally open limit top switch 154 connected to ground. The switch 154 is a small micro switch located in the path of the manual positioning wheel 27. When the switch 154 is closed, the relay 149 is energized through the 24 volt supply and relay contacts 149a open, thereby removing the output of the lower limit reference amplifier 143 from the contacts 142b and positively opening the previously described circuit to the "down" transistor 120.

The relay 149 also includes a set of normally open contacts 149b connected via a lead to a top limit lamp 154a on a nitrogen control panel, not shown. Thus, actuation of switch 154 to indicate a maximum methanol flow is indicated on both gas panels.

The top limit switch 154 also directly grounds the pin 155 and socket 155a on the connectors 72b and 72a. Socket 155a is connected to the ground side of the relay 131 on board 65 which is thereby energized as a result of the 24 volt connection to the power side of the relay. The reverses the contact 132a to open the connection to contact 132b connected between the "up" signal drive line and the transistors 126 and 127 for opening the valve 21. simultaneously, the relay 131 completes a connection to a contact 132c which is connected to pin 156 of the power strip connector 164 on the control board 65. The movable contact 132 of relay 131 is connected to the ground lead 80 of the solenoid relay 75 in series with a diode 157. If the ground connection is removed via amplifier 135, a positive power may still be established through the diode 157 from the relay line and through the circuit to the control panel and particularly the "up" contact 97, Diode 157 and contact 132c is connected via a lead to the terminal pin 156 and to terminal 156a on the control panel 30 which is connected to the return side of the high limit lamp 36, and lamp 36 is "on" when the top limit switch 154 grounds the connection at pin and sockets 155 and 155a. Simultaneously, the return side of relay 131 is grounded which is energized with turn on of the high limit lamp on the panel, to effectively limit any further signals including manual signal from opening and allowing only manually closing valve 21.

The circuit includes a reference amplifier 160 on board 66 forming a continuity demand signal detection unit. The negative input of the amplifier 160 is connected to the controller input in common with the positive input of the reference amplifier 135. The positive input of amplifier 160 is connected to a low level input signal. The amplifier 160 is on whenever the controller signal is above the minute level of 0,150V, and off at a lower voltage. A transistor 161 is connected to amplifier 160 and conducts under all normal operation as a result of the signal from the amplifier 160. The output of transistor 161 is connected to a pin 162 and socket 162a of connector 72. Thus, if the demand signal is lost or the leads are cut, the demand essentially disappears and amplifier 160 goes low. Socket 162a indicates that the controller signal deceased to level indicating a practical loss of signal. Terminal 162a is connected to the ground side of relay 134 to turn on relay 134 and establish the manual control mode. The terminal 162a is also connected to a pin 163 of a strip connector 164, which is connected by a lead to pin 163a on the panel connector 81. Pin 163a grounds one side of the manual lamp 37, the opposite side of which is connected to pin 165 on connector 81, connected in turn to pulse source unit 169 on board 65. The pulse source or circuit 169 includes a capacitive resistive network and a feedback circuitry to provide a pulsed output and energization of the lamp. The "automatic" green lamp 37a will still be on. A combination of the manual lamp 37 and the green lamp 37a simultaneously being energized provides clear indication to the operator that there has been a loss of signal and that if valve control is necessary, actuation of the up/down control lever is required. The lamp 37 has a unique color, such as yellow, and pulsed energization provides a flashing color signal to the operating personnel of the condition. Thus, the opening of the control loop holds the valves in the last flow position and inserts the manual control, with appropriate signals to the operation.

A cable head continuity sensing unit 170 on board 65 includes a pair of amplifiers 171 and 172 having the opposite polarity inputs connected in common to the positive side or lead of the head leads 80. The opposite set of inputs to the amplifiers 171-172 is connected respectively to separate reference signal circuits 173 and 174. Breaking of either line of the head cable 4 results in a loss of signal at the respective positive and negative input, thereby driving one or the other of the amplifiers 171-172 fully on and thereby driving the transistor 168, is connected in common to the manual control lead to energize relay 134 upon loss of signal from the bead cable, and again sets the system from the auto state to the manual state. The transistor 168 is also connected to the terminal pin 163 and establishes a corresponding flashing energization of the lamp 37.

The double pole, double throw switch 91 includes first and second manual contacts 92 connected via lines from the control panel to the control circuit board 66. The first "manual" contact 92a is connected via the strip connector pin 177 of the connector 83 and pin 177a of connector 153 on board 65 to the base of the transistor 116, which controls the high speed window drive. Grounding the base of transistor 116 positively prevents turn-on of the transistor 116 and thus locks the system in a low speed motor mode.

The second "manual" contact 92b grounds signal panel terminal pins 163 and 163a of connecting strips 82 and 164. Terminal pin 163 energize the relay 134 from the 24 volt supply and moves its double pole contacts from the full line auto position shown to the alternate manual position.

Actuation of the relay 134, either through manual switch 91 or from the head signal monitor unit 170 or controller signal monitor 160, disconnects the auto control and requires signaling from the up/down directional control lever 33, and switch unit 95, on the control panel 30.

The contact 97 of switch 95 is connected via terminals 178 and 178a of connectors 82 and 164 to contacts of relay unit 134, and particularly contact 132c. The normally closed contact 132c is connected to contact 134d of switch 134, which has been actuated in the manual mode position. Contact 134d is thereby connected to socket 87a and pin 87 of connectors 72a and 72b. The ground signal of the direction switch 95 is thereby applied to the pin 84 of pulse source 83 to hold the source off. Motor 26 is de-energized.

Placing the up/down switch 95 in the down position, places the grounded movable contact 96 to a dead contact and removes the ground connection from the contact 132c, and the source pin 84, thereby energizing of the motor to close the valve 21.

To open the valve 21, lever 33 is moved up to ground contact 98, removing the ground from the contact 97 and thereby from pin 84 of the source 83 to establish energization of the motor 26. In the "up" position, the "up" contact 98 establishes a ground connection from the control panel 30 via a pins 179 and 179a of terminal strips 82 and 153 directly to the contact 132a of the relay 131 and, in the actuated position of relay 134 normally open relay contact 134c of the relay 134. In the relay actuated position, socket 85a of connector 72a and pin 87 of connector 72b are grounded and grounds pin 86 of pulse source 83 to reverse the pulse sequence to and thereby the rotation of motor 26. Motor now operates the motor 26 to open the valve 21.

The accurate positioning of the valve unit by wheel 27 is dependent on the non-rotational movement of the motor coupled element. The motor 26 maybe dynamically braked by simultaneously energizing a plurality of winding. A normally open switch 180 (Fig. 4a) is connected between a pair of pins 181 and 181a of source 83 and a negative supply connection cable 79a for selectively applying and removing of the negative supply to the one terminal pin 181. Switch 180 is a small micro switch mounted in housing 25 for actuating cover 39. With the cover 39 the switch 180 is open and actuated to pulse terminal pin 181 and the motor is dynamically locked in place. With cover 39 in place, the switch 180 is closed, and the source 83 is conditioned to reversibly drive the motor 26.

In manual, automated signalling of the motor is prevented. A second switch 182 is shown coupled to cover 39 and actuated via the same cover operator switch 108 (Figs. 3 and 4). Switch 182 is a normally open switch and is series connected between pin 84 and the input signal pin 85 of connector 72b on board 66. Only with the cover 39 in place is switch 182 closed permitting automatic programmed control or alternately the manual control provided by lever 33.

A set point monitor is incorporated into the valve positioning control system and provides a continuous indication of the positioning of the valve unit in a selected set point valve position. In Figs. 2-4b, set point lamp 184 is mounted on the panel 30.

The lamp 184, preferably a dual color filament lamp including a pair of L.E.D. display diodes 185 and 185a connected in parallel and in opposite polarization to a D.C. supply. Diode 185 may establish a green display in response to a first polarized supply and the diode 185a may establish a red display in response to an alternate opposite polarized supply. A double pole, double throw relay 186 has movable contacts 186a connected to the low voltage supply and to ground, respectively. The contacts selectively engage first fixed contacts 186b connected to supply first polarized power to the parallel diodes 185 and 185a and second fixed contacts 186c to reverse the polarized power.

The lamp relay winding 187 is connected in circuit to the output of the comparator amplifiers 109 and 110, which respectively generate an open valve signal and a close valve signal. With the valve and flow at the set point, the output of the amplifiers 109 and 110 will be low or effectively off. In actual practice, the system is established to provide a zero output if the signal differential is two percent or less of the set point.

The outputs of amplifiers 109 and 110 are connected through isolating diodes 188 and 188a to a set point status line 189. If either of the amplifiers establishes a drive output signal, a related signal is established through the related diode at the status signal line 189. A relay unit 190 includes contacts 190a in the status line to disable the circuit under manual control. Thus, the relay winding 190b of unit 190 is grounded via a connection to the input terminal 163a to the manual relay 134. This is necessary as under manual control the set point is directly set by the operator.

A time delay unit 191, such as a suitable electronic timer, is connected in the status line downstream of the relay contacts 190a. Unit 189 delays the transmission of the status signal for a selected period within which the valve unit should be driven to the demanded set point in response to any deviation between the program demand signal and the flow rate signal. Typically, a five second period has been selected.

If set point is not reached the time delay unit times out and transfers the status signal via the status line 189 to switch the lamp 184 from set point display color to alarm color.

Unit 191 includes a resistive-capacitor timing network 192 connected to the low voltage supply. A transistor 193 is connected to the input of network 192 and is normally conducting to hold the network in standby. A transistor 194 has its input connected to the status signal line 189 and its output connected to turn transistor 193 off in response to the signal from the status line 189, thereby initiating a timing cycle.

The output of the timing network 191 is connected through a transistorized driving circuit 195 to turn on a transistor 196 connected to the ground side of the relay winding 187 and thereby energize the set point relay 186. Thus, whenever, the timing network 191 times out, the relay contacts 186a move to de-energize the "green" diode 185 and energize the "red" diode 185a. If the lamp 184 is red, indicating a failure of set point, the operator immediately knows that the valve system has not been appropriately adjusted due to some failure within the sensing or control circuitry. The operator can immediately provide necessary attention to the system to make any necessary correction. For example, in a float operated flow meter such as that disclosed, dirt or other foreign matter entering into the float structure may bind the float 14. The float 14 is then stuck in a given position and may provide an erroneous output signal to the control unit. The control may thus be signalled to drive the valve open or closed depending upon the differential and the motor 26 will continue to drive the valve unit without effectively changing the readout. With the described monitor, the continued drive of the motor 26 without reaching the set point within the allotted time will immediately alert the operator to the malfunctioning of the system. The operator can then place it in a manual position to appropriately set the unit and in so doing will be able to locate the particular described malfunction.

The motorized program control system can be replaced with a simple manual control valve actuator 197 in place of the motor and its coupling shaft. In a preferred construction as shown in Fig. 5, the manual control actuator 197 is specially formed with a manually positioned threaded shaft 198 having a coupling end 199 machined to correspond to the diameter of the motor shaft 57 for direct substitution of the manual rotary control for the motor driven control. The identical valve stem units 50 can then be directly used with the manual or the motorized control.

More particularly, the manual control actuator 197 includes a mounting cap 200 adapted to be secured to the upper end of the valve body or cage 40 as a direct replacement for the motorized valve unit and its housing. The threaded shaft member 198 is threaded through a threaded body 201 of cap 200 and rotation of the shaft results in a linear motion of the shaft. The shaft 198 projects upwardly from the body with a knurled control knob 202 secured to the shaft. The extension 199 of the shaft 198, as previously noted, is a machined end for direct coupling to the stem body 51 through the releasable set screw 57a, corresponding to the interconnection of the motor shaft to the valve stem, as shown in Fig. 3. Rotating the knob of 202 establishes linear position of the shaft 198 and the valve stem 52.

## Claims

1. A flowmeter valved apparatus wherein a flowmeter includes a passageway (10) having first and second flow line connectors (2, 22) at the opposite ends of the passageway (10) and a valve body (23) mounted to the flowmeter (1) and including an inner orifice (47) communicating with the first flowline connector and the passageway (10) and having an outer bore (51a) with a common axis with the orifice, comprising the improvement of a valve unit (11) slidably disposed within the bore (51a) and having a valve stem (52) projecting through the orifice (47) and moveable on an axis (64) coincident with the axis of the orifice (47), the stem (52) having a taper defining a progressively reduced diameter passing through the orifice (47), and a motor unit (26) secured to the valve unit (11) for linearly moving the valve stem (52).

2. The apparatus of claim 1 wherein the orifice (47) includes a constant diameter and/or a progressively enlarged diameter from a sharp round edge (53) at the discharge side of the orifice (47).

3. The apparatus of claim 1 or 2 wherein the orifice (47) has a progressively enlarged diameter from an outer sharp round edge (53) and extends inwardly toward the flow passageway (10).

4. The apparatus of anyone of claims 1, 2 or 3 wherein the valve body (23) includes a releasable connection unit (50) with the flowmeter (1) and includes a plurality of valve bodies (40) each having an identical releasable connection unit (59) and each having different diameter orifices than the other valve bodies.

5. The apparatus of anyone of claims 1 to 4 including a plurality of valve stems (52) each having a different angle of taper.

6. The apparatus of anyone of claims 1 to 5 for a manual positioning control (27) connected to the motor (26) for positioning the valve stem (52).

7. The apparatus of anyone of claims 1 to 6 wherein the motor unit (26) includes a stepping motor.

8. The apparatus of anyone of claims 1 to 7 including an enclosure (25) mounted to the valve unit (11) and enclosing the motor (26) and the manual control (27), the motor having rotary output shaft (57) and a rotary-to-linear coupling the shaft (57) to the motor (26), the enclosure (25) having a linear movement of the shaft (57), the enclosure (25) having a releasable access wall (271), an interlock plate (59a), the plate (59a) and the manual control (27) having a radial slot (58) and plate coupling extending parallel to the shaft axis, the manual control (27) is held against rotation while permitting axial movement of the shaft (57) in response to operation of the motor (26).

9. The apparatus of anyone of claims 1 to 8 wherein the motor (26) includes means to dynamically brake the motor.

10. The apparatus of anyone of claims 1 to 9, having a manual/automatic control connecting the motor (26) for operation in response to programmed control or a manual control (27) for reversible motor movement.

11. The apparatus of claim 10 including status sensor units (3) connecting the motor (26) from a programmed control to a manual control in response to selected states in response to selected outputs of the sensor unit (3), the selected outputs include a loss signal from said sensor unit, a high limit signal and a low limit signal, and signals beyond the limit signals.

12. A motorized flowmeter and valve apparatus comprising a flowmeter housing (23) including an elongated flow passageway (10) having an inlet opening at one end and a discharge opening at the opposite end and a valve seat (43) in the discharge opening and having a circular valve orifice (47) with a valve stem (52) moving relative to the orifice (47) to vary the flow, the improvement characterized by the orifice (47) having a sidewall opening with a sharp edge (53) defining a valve seat at the discharge end of the valve orifice (47), the control valve stem (52) mounted to the discharge end of the passageway (10) and projecting inwardly therefrom through the sharp edge (53) and the valve orifice (47), the valve stem (52) having a longitudinal taper from a circula diameter at least equal to the diameter of the edge opening (53) and progressively decreasing in diameter toward the end of stem (52), and a drive motor unit (26) coupled to the stem (52) to reversably position the valve stem (52).

13. The apparatus of anyone of the claims 1 to 12 including a limit control limiting the closing force applied to the valve stem (52) and thereby preventing damage to the orifice (53).

14. The apparatus of anyone of the claims 1 to 13 wherein the drive unit (26) includes a reversible rotary motor having a rotary-to-linear motion converter and having a linearly moving shaft member (57) coupled to the stem (52).

15. A flowmeter and valve apparatus having a flowmeter (1) including a passageway unit (10) selectively opened by a movable valve member (52), a stepping motor (26) having an output shaft (57) coupled to the valve assembly (11), a pulse source (83) connected to the motor (26) for operating the motor (26) in a forward direction and reverse direction, a control circuit having a first control unit (66) for activating the pulse source (83) and including a first state to activate the pulse source (83) to operate the motor (26) in a forward direction and having a second state simultaneously establishing a drive signal to the pulse source (83) and a reverse signal to the pulse source (83) for actuating of the motor (26) in a reverse rotational direction, the first control unit (66) having a control input for selectively establishing the first and second states.

16. The apparatus of claim 15 wherein the control unit (66) includes a programmed control circuit (6) and a manual control circuit, a first switch unit (91) to selectively enable the programmed control circuit and alternately the manual control circuit, and a safety interlock system connected to actuate the switch unit to automatically establish the manual mode in response to a selected operation of the programmed control circuit.

17. The apparatus of claims 15 or 16 wherein the safety interlock system establishes the manual mode in response to an essentially zero command signal, to a flow rate below or above a programmed flow range.

18. The apparatus of anyone of claims 1 to 17 having a monitor (3) sensing the flow rate through the flow meter (1) and creating a flow rate signal, a control unit (6) sets a demand signal for desired flow rate, a first and second comparator circuit (102, 107, 108) comparing the demand signal and the flow rate signal and establishing a valve open signal in response to a first signal differential signal, a speed control comparator circuit establishing a speed control signal in response to a differential between the input signal and the flow rate signal about a preselected differential level for establishing a speed change.

19. The apparatus of claim 18 including a manual control switch (95) having a control lever (32) operable from a centered position to position for opening the valve unit (11) and oppositely movable to a second position for closing the valve unit (11), resilient means (97a) urging the control lever (32) to the centered position whereby the control lever (32) must be positively held in either the one or second position to manually control the reposition of the valve unit (11).

20. The apparatus of claims 18 or 19 wherein the programmed control circuit (6) includes a motor-drive board (66) including an integrated electronic control circuit for operating of the motor (26) and means for sensing the state of the control signals to the valve unit (11), the programmed control circuit (6) including a separate electronic control board (65) for processing of the flow rate signal and the demand signal and establishing the valve close signal and the valve open signal, a power input circuit board (73) including the manual controls and a low voltage power signal for operating of the valve unit (11) and for powering of the circuits on the board (73), motor drive board (66) and the control board (65), separate low voltage cable signals from the power supply board (73) to each of the motor-drive board (66) and the control board (65), first and second bypass capacitors connected to the low voltage power connections at the motor drive boards (66) and the control board (65).

21. The apparatus of claim 20 including a main on-off valve connected in the flow line to the flow meter (1), a switch means operable to energize and de-energize the main valve unit and having a control input, a low voltage input signal connected to the control input in series with a control switch means on the motor-drive board (66) and the control circuit board (65) to selectively close the main on-off valve in response to selected abnormal conditions within the programmed control circuit (6).

EP 0 434 003 A2

FIG. 1

FIG. 3

FIG. 3a

14

FIG. 2

FIG. 5

FIG. 4a

EP 0 434 003 A2

FIG. 4b